# EUROPÄISCHE PATENTSCHRIFT

(11) **EP 2 342 555 B1**
(45) Veröffentlichungstag und Bekanntmachung des Hinweises auf die Patenterteilung: **01.11.2017**
(21) Anmeldenummer: 09783557.3
(22) Anmeldetag: 29.09.2009
(51) Int. Cl.: G01N 29/02, G01N 27/00, G01N 29/036

(54) **Vorrichtung und Verfahren zur Detektion einer Substanz mit Hilfe eines Dünnfilmresonators (FBAR) mit Isolationsschicht und integriertem Ausleseschaltkreis**
Apparatus and method for detection of a substance by means of a film bulk acoustic resonator (FBAR) with isolating layer and readout integrated circuit
Dispositif et procédé pour la détection d'une substance par un résonateur acoustique à film mince (FBAR) avec une couche isolante et un circuit intégré de lecture

(30) Priorität: 21.10.2008 DE 102008052437
(43) Veröffentlichungstag der Anmeldung: 13.07.2011
(73) Patentinhaber: Siemens Aktiengesellschaft, 80333 München (DE)
(72) Erfinder: HUBER, Thomas, 81929 München (DE); NIRSCHL, Martin, 83278 Traunstein (DE); PITZER, Dana, 85716 Unterschleissheim (DE); SCHREITER, Matthias, 81379 München (DE)
(86) Internationale Anmeldenummer: PCT/EP2009/062623
(87) Internationale Veröffentlichungsnummer: WO 2010/046212

(56) Entgegenhaltungen:
- WO-A1-2005/034348
- WO-A1-2008/102577
- DE-A1- 10 113 778
- DE-A1- 10 308 975
- US-A- 5 075 641
- US-A1- 2007 210 349
- GABL R ET AL: "First results on label-free detection of DNA and protein molecules using a novel integrated sensor technology based on gravimetric detection principles" BIOSENSORS AND BIOELECTRONICS, ELSEVIER BV, NL, Bd. 19, Nr. 6, 11. September 2003 (2003-09-11), Seiten 615-620, XP002320316 ISSN: 0956-5663

## Beschreibung

Die Erfindung betrifft eine Vorrichtung zur Detektion mindestens einer Substanz eines Fluids, aufweisend einen piezoelektrischen Dünnfilmresonator mit mindestens einer piezoelektrischen Schicht, einer an der piezoelektrischen Schicht angeordneten Elektrodenschicht, mindestens einer an der piezoelektrischen Schicht angeordneten weiteren Elektrodenschicht und mindestens eine Anlagerungsfläche zum Anlagern der Substanz des Fluids, wobei die piezoelektrische Schicht, die Elektrodenschichten und die Anlagerungsfläche derart ausgestaltet und aneinander angeordnet sind, dass durch eine elektrische Ansteuerung der Elektrodenschichten ein Anregungswechselfeld in die piezoelektrische Schicht eingekoppelt werden kann, der Dünnfilmresonator aufgrund eines in die piezoelektrische Schicht eingekoppelten Anregungswechselfeldes zu einer Resonanzschwingung mit einer Resonanzfrequenz f_{R} anregbar ist und die Resonanzfrequenz f_{R} von einer an der Anlagerungsfläche angelagerten Menge der Substanz abhängig ist. Neben der Vorrichtung wird ein Verfahren zur Detektion einer Substanz unter Verwendung der Vorrichtung angegeben.

Eine Vorrichtung der eingangs genannten Art geht beispielsweise aus der DE 103 08 975 B4 hervor. Die bekannte Vorrichtung weist beispielsweise einen Dünnfilmresonator auf, bei dem die Elektrodenschicht, die piezoelektrische Schicht und die weitere Elektrodenschicht schichtförmig übereinander gestapelt sind. Die piezoelektrische Schicht besteht beispielsweise aus Zinkoxid. Die obere Elektrodenschicht (top electrode) ist aus Gold und weist die Anlagerungsfläche zur Anlagerung (z.B. Adsorption) der Substanz des Fluids auf. Über die untere Elektrodenschicht (bottom electrode) ist der Dünnfilmresonator auf einem Siliziumsubstrat aufgebracht. Zur akustischen Entkopplung des Siliziumsubstrats und des Dünnfilmresonators voneinander ist dazwischen beispielsweise ein akustischer Spiegel aus λ/4-dicken Schichten unterschiedlicher akustischer Impedanz angeordnet.

Aus der WO 2005/034348A1 ist eine Vorrichtung zur Detektion mindestens einer Substanz eines Fluids aufweisend einen piezoakustischen Dünnfilmresonator bekannt, bei der die piezoelektrische Schicht, die Elektrodenschichten und die Anlagerungsfläche derart ausgestaltet und aneinander angeordnet sind, dass durch eine elektrische Ansteuerung der Elektrodenschichten ein Anregungswechselfeld in die piezoelektrische Schicht eingekoppelt werden kann, und der Dünnfilmresonator aufgrund eines in die piezoelektrische Schicht eingekoppelten Anregungswechselfeldes zu einer Resonanzschwingung mit einer Resonanzfrequenz f_{R} anregbar ist, die von einer an der Anlagerungsfläche angelagerten Menge der Substanz abhängig ist.

Aufgabe der vorliegenden Erfindung ist es, die bekannte Vorrichtung zur Detektion einer Substanz derart weiterzubilden, dass eine Massensensitivität gesteigert wird.

Die Lösung der Aufgabe wird vorliegend in den Ansprüchen, der Beschreibung und den Figuren offenbart.

Zur Lösung der Aufgabe wird eine Vorrichtung zur Detektion mindestens einer Substanz eines Fluids angegeben, aufweisend einen piezoakustischen Dünnfilmresonator mit mindestens einer piezoelektrischen Schicht, einer an der piezoelektrischen Schicht angeordneten Elektrodenschicht, mindestens einer an der piezoelektrischen Schicht angeordneten weiteren Elektrodenschicht und mindestens eine Anlagerungsfläche zum Anlagern der Substanz des Fluids, wobei die piezoelektrische Schicht, die Elektrodenschichten und die Anlagerungsfläche derart ausgestaltet und aneinander angeordnet sind, dass durch eine elektrische Ansteuerung der Elektrodenschichten ein Anregungswechselfeld in die piezoelektrische Schicht eingekoppelt werden kann, der Dünnfilmresonator aufgrund eines in die piezoelektrische Schicht eingekoppelten Anregungswechselfeldes zu einer Resonanzschwingung mit einer Resonanzfrequenz f_{R} anregbar ist und die Resonanzfrequenz f_{R} von einer an der Anlagerungsfläche angelagerten Menge der Substanz abhängig ist, wobei die Vorrichtung einen in CMOS-Technologie im Substrat integrierten Ausleseschaltkreis, eine elektrische Isolationsschicht, bestehend aus Siliziumdioxid, einen akustischen Spiegel und Kontakte umfasst, derart, dass der Dünnfilmresonator über dem Ausleseschaltkreis, der Isolationsschicht und dem akustischen Spiegel angeordnet ist, wobei über die elektrischen Kontakte der Ausleseschaltkreis zur elektrischen Ansteuerung mit den Elektrodenschichten des Dünnfilmresonators verbunden ist. Die Vorrichtung ist auch dadurch gekennzeichnet, dass unmittelbar auf einer der piezoelektrischen Schicht abgekehrten Seite mindestens einer der Elektrodenschichten mindestens eine elektrische Isolationsschicht zur elektrischen Isolierung der Elektrodenschicht angeordnet ist. Die Isolationsschicht erstreckt sich dabei über den ganzen Dünnfilmresonator, auch seitlich, und bewirkt als Schutzschicht die Passivierung des Dünnfilmresonators gegenüber der Umgebung. Zur Lösung der Aufgabe wird auch ein Verfahren zur Detektion mindestens einer Substanz eines Fluids unter Verwendung der Vorrichtung mit folgenden Verfahrensschritten angegeben: a) Zusammenbringen der Anlagerungsfläche und des Fluids derart, dass die Substanz an der Anlagerungsfläche angelagert werden kann und b) Bestimmen der Resonanzfrequenz des Dünnfilmresonators.

Der Dünnfilmresonator weist beispielsweise einen Schichtaufbau aus unterer Elektrodenschicht, piezoelektrischer Schicht und oberer Elektrodenschicht auf. Die Elektrodenschichten sind an unterschiedlichen Seiten der piezoelektrischen Schicht angeordnet. Denkbar ist auch, dass die Elektrodenschichten an einer Seite der piezoelektrischen Schicht angeordnet sind.

Durch die elektrische Ansteuerung der Elektrodenschichten ist der Dünnfilmresonator zu Dickenschwingungen anregbar. Im Hinblick auf eine Verwendung zur Detektion einer Substanz einer Flüssigkeit ist es günstig, die piezoelektrische Schicht derart auszugestalten, dass sie aufgrund der Ansteuerung der Elektrodenschichten zu Scherdickenschwingungen anregbar ist. Für eine hohe Massensensitivität ist es vorteilhaft, die Resonanzfrequenz f_{R} aus dem Bereich von einschließlich 500 MHz bis einschließlich 10 GHz zu wählen. Dazu ist die Schichtdicke der piezoelektrischen Schicht aus dem Bereich von einschließlich 0,1 µm bis einschließlich 20 µm gewählt.

Die piezoelektrische Schicht ist beispielsweise aus Zinkoxid. Ein anderes geeignetes Material ist beispielsweise Aluminiumnitrid. Die Elektrodenschichten weisen vorzugweise Schichtdicken von unter 1 µm auf (z.B. 10 nm). Größere Schichtdicken von bis hin zu wenigen µm sind ebenfalls denkbar.

In einer besonderen Ausgestaltung weist die Isolationsschicht anorganisches Isolationsmaterial auf. Das Isolationsmaterial kann dabei beliebig sein. Vorzugsweise aber weist das anorganische Isolationsmaterial zumindest eine aus der Gruppe Metall-Nitrid und Metall-Oxid ausgewählte chemische Verbindung auf. Beispielsweise ist das Isolationsmaterial Aluminiumoxid (Al₂O₃) oder Siliziumnitrid (Si₃N₄). In einer bevorzugten Ausgestaltung ist das Metall-Oxid Siliziumdioxid (SiO₂). Siliziumdioxid zeichnet sich neben einer guten elektrischen Isolationsfähigkeit durch eine niedrige akustische Impedanz aus und ist daher besonders für die Anwendung mit dem Dünnfilmresonator geeignet.

Die Elektrodenschichten sind vorzugsweise aus Aluminium. In einer besonderen Ausgestaltung weist die Elektrodenschicht, auf der die Isolationsschicht angeordnet ist, Aluminium auf. Aluminium als Elektrodenmaterial ist für Dünnfilmresonatoren besonders geeignet. Aluminium weist einen niedrigen elektrischen Widerstand auf. Dadurch wird ein Widerstandsrauschen minimiert. Wesentlich ist auch eine geringe akustische Impedanz. Dies führt zu einer relativ hohen Massensensitivität. Ebenso die geringe Massendichte Aluminiums. Zudem zeichnet sich Aluminium durch eine hohe akustische Geschwindigkeit aus. Dadurch werden Phasenanteile im entsprechenden Material gering gehalten.

Neben Aluminium sind aber auch andere Materialien und Material-Kombinationen ebenso denkbar wie ein Mehrschichtaufbau aus unterschiedlichen Materialien.

Der Dünnfilmresonator kann auf einem beliebigen Substrat (Träger) aufgebracht sein. Vorzugsweise ist der Dünnfilmresonator auf einem Halbleitersubstrat angeordnet. Im Halbleitersubstrat kann ein Ausleseschaltkreis integriert sein. Dies erfolgt beispielsweise mittels CMOS(Complementary Metal Oxid Semiconductor)-Technologie. Im Hinblick auf einen Platz sparenden Aufbau ist es besonders vorteilhaft, wenn Dünnfilmresonator über einen im Halbleitersubstrat integrierten Ausleseschaltkreis angeordnet ist. Es ist aber genauso möglich, dass der Ausleseschaltkreis über ein SMD (Surface Mounted Device)-Bauelement realisiert ist.

Die Anlagerungsfläche ist in einer besonderen Ausgestaltung von der Isolationsschicht gebildet. Dies bedeute die Isolationsschicht eine Bio-Funktionalisierung trägt.

Gemäß einer besonderen Ausgestaltung ist die Anlagerungsfläche aber von einer auf der Isolationsschicht aufgebrachten chemisch sensitiven Beschichtung gebildet. Die chemisch sensitive Beschichtung kann beispielsweise eine Kunststoffbeschichtung sein. Insbesondere weist die chemisch sensitive Beschichtung Gold auf. Vorzugsweise ist die chemisch sensitive Beschichtung aus Gold. Eine chemisch sensitive Beschichtung aus Gold eignet sich besonders zur Bio-Funktionalisierung.

Die chemisch sensitive Beschichtung ist auf der Isolationsschicht aufgebracht. Damit trägt die chemisch sensitive Beschichtung selbst auch zur Resonanzfrequenz des Dünnfilmresonators bei. Insbesondere im Fall von Gold ist aufgrund der relativ hohen Massedichte im Hinblick auf eine möglichst hohe Massensensitivität eine möglichst geringe Schichtdicke von Vorteil. Gemäß einer besonderen Vorrichtung, wobei die chemisch sensitive Beschichtung eine Schichtdicke aus dem Bereich von 5 nm bis 30 nm aufweist. Diese Schichtdicken reichen völlig aus, um die notwendige Bio-Funktionalisierung zu erzielen. Gleichzeitig wird aufgrund der niedrigen Masse der chemisch sensitiven Beschichtung eine hohe Massensensitivität erzielt. Basis hierfür ist eine sehr hohe Resonanzfrequenz des Dünnfilmresonators. Bei geeigneten Materialien und Schichtdicken können Resonanzfrequenzen von aus dem Bereich von einschließlich 500 MHz bis einschließlich 10 GHz erzielt werden.

Die Vorrichtung kann zur Analyse von Gasen oder Gasgemischen eingesetzt werden. Vorzugsweise wird die Vorrichtung zur Detektion von Biomolekülen in Flüssigkeiten eingesetzt.

Zusammenfassen ergeben sich mit der Erfindung folgende besonderen Vorteile:
- Die Vorrichtung zur Detektion einer Substanz eines Fluids kann sehr flexibel aufgebaut sein. So ist der Dünnfilmresonator der Vorrichtung entweder auf einem Wafer (z.B. aus Halbleitermaterial) oder einer CMOS-Auslese-Elektronik oder auf einer CMOS-Auslese-Elektronik aufgebaut, die über eine Isolierungsschicht (beispielsweise SiO₂) vom Dünnfilmresonator abgetrennt ist.
- Insbesondere mit einer oberen Elektrodenschicht aus Aluminium sind folgende Vorteile realisiert: Durch den geringen elektrischen Widerstand wird das Widerstandsrauschen minimiert. Die geringe akustische Impedanz Aluminiums führt zu einer erhöhten Massensensitivität des Dünnfilmresonators.

Den gleichen Effekt hat die geringe Massendichte Aluminiums mit dem Ergebnis, einer sehr hohen Massensensitivität.

Aluminium zeichnet sich auch durch eine hohe CMOS Kompatibilität aus. Damit ist die Integration in CMOS-Schaltkreise vereinfacht. Gold wäre hierfür eher ungeeignet, da es mit CMOS Schaltkreisen schwer kompatibel ist. Darüber hinaus zeichnet es sich durch eine relativ hohe Massendichte aus. Dies führt zu einer relativ geringen Massensensitivität.
- Aufgrund der Isolationsschicht ist eine effiziente elektrische Isolierung des Dünnfilmresonators und der Fluids voneinander realisiert.
- Im Falle von SiO₂ als Isolationsmaterial verringert sich der Temperaturkoeffizient der Resonanzfrequenz, d.h. die Stabilität der Resonanzfrequenz des Dünnfilmresonators gegenüber Temperaturschwankungen wird erhöht.
- Bei Verwendung eines CVD-Prozesses zur Aufbringung der Isolationsschicht z.B. aus SiO₂ wird die Oberfläche geglättet. Dies bewirkt eine Verringerung der akustischen Verluste insbesondere bei einer Anwendung in Wasser.
- Insbesondere die Kombination von Elektrodenschicht aus Aluminium und Isolationsschicht aus Siliziumdioxid ist vorteilhaft. Die akustischen Verluste von Aluminium und Siliziumdioxid sind geringer als von beispielsweise Gold. Es resultiert damit eine um etwa das Dreifache erhöhte Massensensitivität. Weil die Materialien Aluminium und Siliziumdioxid weniger Phasenanteile beinhalten als beispielsweise Gold, kann die piezoelektrische Schicht bei gleicher Resonanzfrequenz dicker gemacht werden. Dadurch befinden sich höhere Phasenanteile in der piezoelektrischen Schicht. Dies erhöht den effektiven piezoelektrischen Kopplungskoeffizient.
- Durch die höhere Dicke der piezoelektrischen Schicht, verringert sich die elektrische Kapazität des Dünnfilmresonators, was für viele Ausleseschaltkreise vorteilhaft ist.

Anhand mehrerer Ausführungsbeispiele und der dazugehörigen Figuren wird die Erfindung im Folgenden näher beschrieben. Die Figuren sind schematisch und stellen keine maßstabsgetreuen Abbildungen dar.

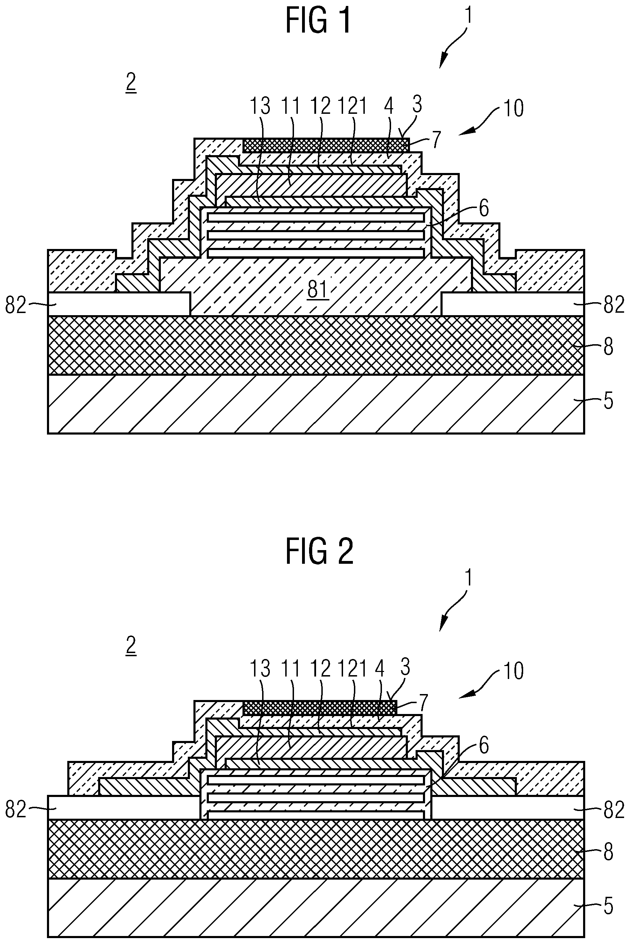

Figuren 1 bis 4 zeigen jeweils eine Ausführungsform der Vorrichtung zur Detektion einer Substanz eines Fluids in einem seitlichen Querschnitt.

Die Vorrichtung zur Detektion einer Substanz eines Fluids ist ein Biosensor zur Detektion von Biomolekülen. Die Biomoleküle sind Teile einer DNA. Alternativ dazu werden Biomoleküle in Form von Proteinen detektiert.

Wesentlicher Bestandteil der Vorrichtung 1 zur Detektion einer Substanz eines Fluids 2 ist ein piezoakustischer Dünnfilmresonator 10 mit übereinander gestapelter piezoelektrischer Schicht 11, Elektrodenschicht (top electrode) 12 und weiterer Elektrodenschicht (bottom electrode) 13. Die piezoelektrische Schicht ist aus Zinkoxid. Eine Schichtdicke der Zinkoxidschicht beträgt etwa 0,5 µm. Die obere Elektrodenschicht ist aus Aluminium und etwa 100 nm dick. Die untere Elektrodenschicht etwa 890 nm dick. Eine laterale Ausdehnung des Dünnfilmresonators beträgt etwa 200 µm.

Der Dünnfilmresonator ist auf einem akustischen Spiegel 6 aus λ/4-dicken Schichten unterschiedlicher akustischer Impedanz eines Siliziumsubstrats 5 aufgebracht.

Unmittelbar auf einer der piezoelektrischen Schicht abgekehrten Seite 121 der Elektrodenschicht 12 ist eine elektrische Isolationsschicht 4 zur elektrischen Isolierung der Elektrodenschicht 12 angeordnet. Die Isolationsschicht ist etwa 100 nm dick und besteht aus Siliziumdioxid als anorganisches Isolationsmaterial. In einer alternativen Ausgestaltung ist das anorganische Isolationsmaterial Siliziumnitrid. Aufgebracht wird die Isolationsschicht mit Hilfe eines CVD (Chemical Vapour Deposition)-Verfahrens.

### Beispiel 1:

Zur Bildung der Anlagerungsfläche 3 für die Anlagerung der Substanz des Fluids ist auf der Isolationsschicht eine chemisch sensitive Beschichtung 7 aus Gold aufgebracht (Figur 1). Die Beschichtung weist eine Funktionalisierung für die Biomoleküle auf. Die Biomoleküle können an der Anlagerungsfläche angelagert werden.

Der Dünnfilmresonator ist über einen in CMOS-Technologie im Substrat 5 integrierten Ausleseschaltkreis 8 angeordnet. Zur elektrischen Isolierung des Ausleseschaltkreises ist eine Isolationsschicht 81 zwischen dem akustischen Spiegel 5 und dem Ausleseschaltkreis 8 vorhanden. Diese Isolationsschicht besteht aus Siliziumdioxid. Über die elektrischen Kontakte 82 ist der Ausleseschaltkreis zur elektrischen Ansteuerung mit den Elektrodenschichten des Dünnfilmresonators verbunden.

### Beispiel 2:

In diesem nicht erfindungsgemäßem Beispiel ist im Gegensatz zum vorangegangenen Beispiel keine zusätzliche Isolationsschicht zwischen dem akustischen Spiegel 6, auf dem der Dünnfilmresonator angeordnet ist, und dem Ausleseschaltkreis 8 vorhanden (Figur 2).

### Beispiel 3:

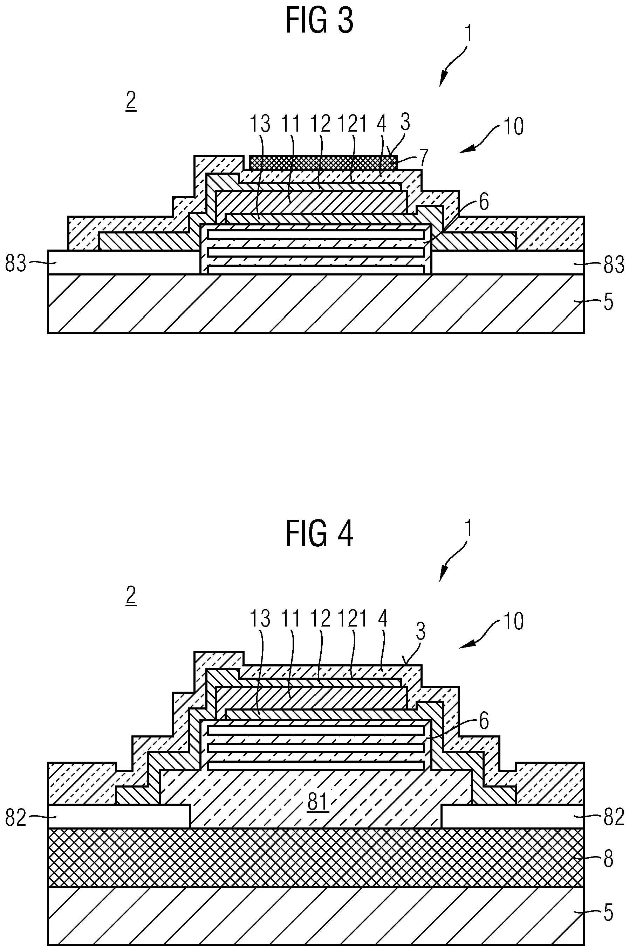

Gemäß diesem nicht erfindungsgemäßem Beispiel ist der Dünnfilmresonator nicht über einen im Siliziumsubstrat integrierten Ausleseschaltkreis angeordnet (Figur 3). Über den akustischen Spiegel findet unmittelbar eine akustische Entkopplung des Dünnfilmresonators und des Substrats statt. Ein nicht dargestellter Ausleseschaltkreis ist entweder an einer anderen Stelle des Halbleitersubstrats integriert, oder als externes Bauelement realisiert. Über die Kontakte 83 ist dieser Ausleseschaltkreis mit den Elektrodenschichten des Dünnfilmresonators elektrisch verbunden.

### Beispiel 4:

Dieses Ausführungsbeispiel leitet sich vom Beispiel 1 ab. Im Unterschied dazu bildet die Isolationsschicht 4 die Anlagerungsfläche. Die Isolationsschicht weist die für die Anlagerung der Biomoleküle notwendige Biofunktionalisierung auf.

## Patentansprüche

1. Vorrichtung (1) zur Detektion mindestens einer Substanz eines Fluids (2), aufweisend einen piezoakustischen Dünnfilmresonator (10) mit
- mindestens einer piezoelektrischen Schicht (11),
- einer an der piezoelektrischen Schicht (11) angeordneten Elektrodenschicht (12),
- mindestens einer an der piezoelektrischen Schicht (11) angeordneten weiteren Elektrodenschicht (13) und
- mindestens eine Anlagerungsfläche (3) zum Anlagern der Substanz des Fluids (2), wobei
- die piezoelektrische Schicht (11), die Elektrodenschichten (12, 13) und die Anlagerungsfläche (3) derart ausgestaltet und aneinander angeordnet sind, dass
- durch eine elektrische Ansteuerung der Elektrodenschichten (12, 13) ein Anregungswechselfeld in die piezoelektrische Schicht (11) eingekoppelt werden kann,
- der Dünnfilmresonator (10) aufgrund eines in die piezoelektrische Schicht (11) eingekoppelten Anregungswechselfeldes zu einer Resonanzschwingung mit einer Resonanzfrequenz f_{R} anregbar ist,
- die Resonanzfrequenz f_{R} von einer an der Anlagerungsfläche (3) angelagerten Menge der Substanz abhängig ist, **dadurch gekennzeichnet, dass**
- unmittelbar auf einer der piezoelektrischen Schicht abgekehrten Seite (121) mindestens einer der Elektrodenschichten mindestens eine elektrische Isolationsschicht (4) zur elektrischen Isolierung der Elektrodenschicht und zur Verkapselung des Dünnfilmresonators (10) angeordnet ist,
- die Isolationsschicht (4) sich über den ganzen Dünnfilmresonator (10), auch seitlich, erstreckt und als Schutzschicht die Passivierung des Dünnfilmresonators (10) gegenüber der Umgebung bewirkt und wobei die Vorrichtung (1) einen in CMOS-Technologie im Substrat (5) integrierten Ausleseschaltkreis (8), eine elektrische Isolationsschicht (81), bestehend aus Siliziumdioxid, einen akustischen Spiegel (5) und Kontakte (82), wobei der Dünnfilmresonator (10) über dem Ausleseschaltkreis (8), der Isolationsschicht (81) und dem akustischen Spiegel (5) angeordnet ist, wobei über die elektrischen Kontakte (82) der Ausleseschaltkreis (8) zur elektrischen Ansteuerung mit den Elektrodenschichten (12,13) des Dünnfilmresonators (10) verbunden ist, umfasst.

2. Vorrichtung nach Anspruch 1, wobei der Dünnfilmresonator auf einem Halbleitersubstrat (5) angeordnet ist.

3. Vorrichtung nach Anspruch 2, wobei der Dünnfilmresonator über einer im Halbleitersubstrat integrierten Ausleseschaltkreis angeordnet ist.

4. Vorrichtung nach einem der Ansprüche 1 bis 3, wobei die Anlagerungsfläche von der Isolationsschicht gebildet ist.

5. Vorrichtung nach einem der Ansprüche 1 bis 4, wobei die Elektrodenschicht (12) auf der die Isolationsschicht (4) angeordnet ist, Aluminium aufweist.

6. Vorrichtung nach einem der Ansprüche 1 bis 5, wobei die Anlagerungsfläche von einer auf der Isolationsschicht aufgebrachten chemisch sensitiven Beschichtung (7) gebildet ist.

7. Vorrichtung nach Anspruch 6, wobei die chemisch sensitive Beschichtung Gold aufweist.

8. Vorrichtung nach Anspruch 6 oder 7, wobei die chemisch sensitive Beschichtung eine Schichtdicke aus dem Bereich von 5 nm bis 30 nm aufweist.

9. Verfahren zur Detektion mindestens einer Substanz eines Fluids (2) unter Verwendung einer Vorrichtung (1) nach einem der Ansprüche 1 bis 8 mit folgenden Verfahrensschritten:
a) Zusammenbringen der Anlagerungsfläche (3) und des Fluids (2) derart, dass die Substanz an der Anlagerungsfläche (3) angelagert werden kann, und
b) Bestimmen der Resonanzfrequenz des Dünnfilmresonators (10).

## Claims

1. Device (1) for detecting at least one substance of a fluid (2), comprising a piezoacoustic thin film resonator (10) with
- at least one piezoelectric layer (11),
- an electrode layer (12) arranged on the piezoelectric layer (11),
- at least one further electrode layer (13) arranged on the piezoelectric layer (11) and
- at least one adsorption surface (3) for adsorbing the substance of the fluid (2), wherein
- the piezoelectric layer (11), the electrode layers (12, 13) and the adsorption surface (3) are designed and arranged on one another in such a way that
- an excitation alternating field can be coupled into the piezoelectric layer (11) by electrically activating the electrode layers (12, 13),
- the thin film resonator (10) can be excited to a resonance oscillation at a resonance frequency f_{R} because of an excitation alternating field coupled into the piezoelectric layer (11), and
- the resonance frequency f_{R} depends on an amount of the substance adsorbed on the adsorption surface (3), **characterised in that**
- at least one electrical insulating layer (4) for electrically insulating the electrode layer and for encapsulating the thin film resonator (10) is arranged directly on a side (121) of at least one of the electrode layers facing away from the piezoelectric layer,
- the insulating layer (4) extends over the entire thin film resonator (10), including laterally, and as a protective layer effects the passivisation of the thin film resonator (10) in respect of the surrounding area, and wherein the device (1) comprises a read-out circuit (8) integrated in the substrate (5) using CMOS technology, an electrical insulating layer (81) consisting of silicon dioxide, an acoustic mirror (5) and contacts (82), wherein the thin film resonator (10) is arranged above the read-out circuit (8), the insulating layer (81) and the acoustic mirror (5), wherein the read-out circuit (8) is connected via the electrical contacts (82) to the electrode layers (12, 13) of the thin film resonator (10) for electrical activation.

2. Device according to claim 1, wherein the thin film resonator is arranged on a semiconductor substrate (5).

3. Device according to claim 2, wherein the thin film resonator is arranged above a read-out circuit integrated in the semiconductor substrate.

4. Device according to one of claims 1 to 3, wherein the adsorption surface is formed by the insulating layer.

5. Device according to one of claims 1 to 4, wherein the electrode layer (12) on which the insulating layer (4) is arranged includes aluminium.

6. Device according to one of claims 1 to 5, wherein the adsorption surface is formed by a chemically sensitive coating (7) applied to the insulating layer.

7. Device according to claim 6, wherein the chemically sensitive coating includes gold.

8. Device according to claim 6 or 7, wherein the chemically sensitive coating has a layer thickness in the range from 5 nm to 30 nm.

9. Method for detecting at least one substance of a fluid (2) using a device (1) according to one of claims 1 to 8, comprising the following process steps:
a) bringing together the adsorption surface (3) and the fluid (2) in such a way that the substance can be adsorbed on the adsorption surface (3), and
b) determining the resonance frequency of the thin film resonator (10).

## Revendications

1. Dispositif (1) pour la détection d'au moins une substance d'un fluide (2), comportant un résonateur piézoacoustique à film mince (10) avec
- au moins une couche piézoélectrique (11),
- une couche d'électrodes (12) agencée au niveau de la couche piézoélectrique (11),
- au moins une autre couche d'électrodes (13) agencée au niveau de la couche piézoélectrique (11) et
- au moins une surface d'accumulation (3) pour l'accumulation de la substance du fluide (2),
- la couche piézoélectrique (11), les couches d'électrodes (12, 13) et la surface d'accumulation (3) étant conçues et agencées les unes au niveau des autres de telle sorte que
- une commande électrique des couches d'électrodes (12, 13) permet de coupler un champ d'excitation alternatif dans la couche piézoélectrique (11),
- le résonateur à film mince (10) peut être excité en raison d'un champ d'excitation alternatif couplé dans la couche piézoélectrique (11) pour atteindre une vibration de résonance avec une fréquence de résonance f_{R},
- la fréquence de résonance f_{R} dépend d'une quantité de la substance accumulée au niveau de la surface d'accumulation (3),
**caractérisé en ce que**
- au moins une couche d'isolation électrique (4) est agencée directement sur un côté (121) d'au moins l'une des couches d'électrodes opposé à la couche piézoélectrique pour isoler électriquement la couche d'électrodes et pour encapsuler le résonateur à film mince (10),
- la couche d'isolation (4) s'étend sur l'ensemble du résonateur à film mince (10), y compris latéralement, et entraînant, en tant que couche de protection, la passivation du résonateur à film mince (10) par rapport à l'environnement, et le dispositif (1) comprenant un circuit de lecture (8) intégré au substrat (5) en technologie CMOS, une couche d'isolation électrique (81) composée de dioxyde de silicium, un miroir acoustique (5) et des contacts (82), le résonateur à film mince (10) étant agencé au-dessus du circuit de lecture (8), de la couche d'isolation (81) et du miroir acoustique (5), le circuit de lecture (8) étant relié aux couches d'électrodes (12, 13) du résonateur à film mince (10) par les contacts électriques (82) aux fins de la commande électrique.

2. Dispositif selon la revendication 1, le résonateur à film mince étant agencé sur un substrat semi-conducteur (5) .

3. Dispositif selon la revendication 2, le résonateur à film mince étant agencé au-dessus d'un circuit de lecture intégré dans le substrat semi-conducteur.

4. Dispositif selon l'une des revendications 1 à 3, la surface d'accumulation étant formée par la couche d'isolation.

5. Dispositif selon l'une des revendications 1 à 4, la couche d'électrodes (12) sur laquelle est agencée la couche d'isolation (4) comportant de l'aluminium.

6. Dispositif selon l'une des revendications 1 à 5, la surface d'accumulation étant formée par un revêtement (7) chimiquement sensible appliqué sur la couche d'isolation.

7. Dispositif selon la revendication 6, le revêtement chimiquement sensible comportant de l'or.

8. Dispositif selon la revendication 6 ou 7, le revêtement chimiquement sensible présentant une épaisseur de couche de l'ordre de 5 nm à 30 nm.

9. Procédé pour la détection d'au moins une substance d'un fluide (2) avec utilisation d'un dispositif (1) selon l'une des revendications 1 à 8, comportant les étapes suivantes :
a) assemblage de la surface d'accumulation (3) et du fluide (2) de telle sorte que la substance peut être accumulée au niveau de la surface d'accumulation (3) et
b) détermination de la fréquence de résonance du résonateur à film mince (10).
